# EUROPEAN PATENT SPECIFICATION

(11) **EP 3 364 912 B1**
(45) Date of publication and mention of the grant of the patent: **31.07.2019**
(21) Application number: 16805209.0
(22) Date of filing: 19.10.2016
(51) Int. Cl.: A61C 13/00, A61C 9/00, A61C 13/34, A61C 8/00

(54) **METHOD OF IDENTIFICATION, FITTING AND FIXING OF ANALOG REFERENCE ELEMENTS FOR THE CONSTRUCTION OF ORTHODONTIC DEVICES BY MEANS OF MINISCREWS**
VERFAHREN ZUM IDENTIFIZIEREN, ANPASSEN UND FIXIEREN VON ANALOGEN REFERENZELEMENTEN FÜR DEN AUFBAU VON ORTHODONTISCHEN VORRICHTUNGEN MITTELS MINISCHRAUBEN
PROCÉDÉ D'IDENTIFICATION, D'AJUSTEMENT ET DE FIXATION D'ÉLÉMENTS DE RÉFÉRENCE ANALOGUES POUR LA CONSTRUCTION DE DISPOSITIFS ORTHODONTIQUES AU MOYEN DE MINIVIS

(30) Priority: 20.10.2015 IT UB20154970
(43) Date of publication of application: 29.08.2018
(73) Proprietor: Easy Driver Group S.r.l.s., 43120 Parma (IT)
(72) Inventor: DALLATANA, Gianluca, 43122 Parma (PR) (IT); RIVA, Roberto, 43122 Parma (PR) (IT); DE GABRIELE, Oronzo, 43122 Parma (PR) (IT)
(74) Representative: Dallaglio, Fabrizio
(86) International application number: PCT/IB2016/056281
(87) International publication number: WO 2017/068509

(56) References cited:
- WO-A1-2009/146164
- US-A1- 2014 186 796

## Description

### SCOPE OF THE INVENTION

The present invention relates to the field of orthodontic appliances, and more specifically it relates to a method adapted to allow an efficient identification of references on dental casts made of plaster or equivalent material, in order to subsequently construct the orthodontic appliance on such a mold.

### PRIOR ART

Procedures and mini-implants have been implemented in recent years to obtain a temporary skeletal anchorage which obviates the most common intra- and extraoral orthodontic devices, often annoying to the patient and above all less effective from the biomechanical point of view.

The fitting technique is unobtrusive and quite simple by the use of self-tapping miniscrews, which can be positioned in the oral cavity and provide good stability in the positioning and subsequent removal thereof without problems.

Once positioned in the oral cavity, the miniscrews are also used as reference elements in the construction of an orthodontic appliance: in fact, the orthodontic appliance is constructed starting from the detection of an imprint subsequent to the direct fitting of the miniscrews, free hand or using a reference template/guide; such imprint, using screw analogs transfer systems, defines the positioning of the screws fixed in the patient's mouth.

The most general method involves the fitting of self-tapping miniscrews in the patient's arch through a reference template; the latter has previously been made by computer processing (using a CBCT tomographic or lateral teleradiographic technique) of the patient's anatomical structure combining it with a scan of his/her dental cast. This technique allows the ideal positioning of the miniscrews, also by viewing the full volume of the cranial bone structure and of the virtual positioning template.

In essence, the operating process currently being used involves the digital analysis and construction of a first template which can be used for guiding and positioning the self-tapping miniscrews in the palatal cavity; after positioning said miniscrews, a further imprint of the patient's arch is acquired with the miniscrews fitted in the arch, via transfer and positioning systems of the miniscrew analogs on the imprint, the same further imprint is developed in plaster so as to obtain the developed model that is used for the construction of the orthodontic appliance.

Finally, the constructed appliance is sent to the dentist who provides to the positioning thereof by anchoring it to the miniscrews previously fitted in the patient's arch.

The biggest problem encountered and which often affects the efficiency of the current procedures is the lack of accuracy due to the anatomical difficulties of the fitting zone.

This "double step" due to the implant of the miniscrews and the subsequent resumption of their positioning for the construction of the orthodontic appliance makes the procedure long and above all inaccurate: certainly the two imprints taken from the patient, the first one without screws and the second one with screws, lead to significant differences between the desired positioning and that obtained, with certain parallelism errors which are impossible to control with the current procedure.

WO2009/146164A1 discloses a method of identification of the positioning of references in the construction of orthodontic appliances.

### DESCRIPTION AND ADVANTAGES OF THE INVENTION

The object of the present invention is to provide an improved method for the identification of the positioning of references in the construction of orthodontic references within the scope of a simple and rational solution. These and other objects are achieved with the features of the invention described in the independent claim 1.

In particular, the present invention provides a method for the identification of the positioning of references on a mold made of plaster or equivalent material, references which are useful for the subsequent construction of orthodontic appliances; the method involves
- digital scanning of a plaster mold (or equivalent material) of the arch or oral scan and then the overlapping, via software, with a virtual image obtained by CAT (CBCT) and the obtaining of a virtual image by 3D software program;
- the programming and virtual positioning, namely by computer and computer software program, of miniscrews which will be fitted in the palatal arch; said virtual positioning is always through digital processing and modeling of a virtual positioning guide (that is, a guide that provides calibrated holes for fitting respective miniscrews);
- constructing the positioning guide using a 3D molding technique (stereolithography or prototyping) or milling;
- positioning the positioning guide on the initial plaster mold (cast); fitting and fixing of the miniscrew analogs, so that the analog head is positioned at the same height as that of the corresponding miniscrew;
- construction of the orthodontic appliance.

Finally, the set can then be delivered to the clinical studio.

In other words, a single positioning body is used both for the positioning of the analogs and as a reference and positioning guide for inserting the miniscrews; in particular, the use of the positioning body as a means for positioning the analogs on the initial plaster mold precedes the use as a reference guide for fitting the miniscrews.

### ADVANTAGES:

- Maximum parallelism between the mini implants (which increases the success rate of the system and decreases the potential rejection).
- With a single imprint of the patient, the miniscrews can be positioned both on the plaster mold and on the patient, thus the doctor who will apply the system will at the same time receive the miniscrew fitting template and the orthodontic appliance ready to be fitted, perfectly modeled, on the analog position of the plaster mold.
- Higher precision in the construction of the orthodontic appliance, as it is made on the best possible project. Orthodontic implant
- Simple, minimally invasive fitting, ensures predictability of the result based on the patient's bone characteristics.
- The components are designed to give safety to the clinician and comfort to the patient.

Said objects and advantages are all achieved by the construction method of any kind of orthodontic appliance available, object of the present invention, which is characterized by the appended claims.

According to an embodiment, the method of identification, fitting and fixing of analog reference elements on a mold or cast of plaster or equivalent material, wherein said mold or cast represents a copy of the (upper) dental arch; the identification of said reference points, on the mold or cast, takes place by means of a positioning body shaped so as to bear both the negative imprint of at least a portion of the dental arch and at least one cylindrical guide adapted to replicate the fitting angle of the analogs and their depth; the method involves the implementation of said positioning element starting from a virtual image obtained by digital scanning of a model of the arch or oral imprint and software overlapping of one or more CAT images (CBCT); said virtual image also containing one or more references for positioning virtual miniscrews, and wherein said virtual miniscrews also identify the position of the reference analogs; after such a virtual image, the positioning guide is constructed by a 3D printing technique (or stereolithography or prototyping) or milling; then, the method involves positioning said positioning element on the initial plaster mold (cast) and the fitting and fixing of the reference analogs of the miniscrews, so that the head of the analog is positioned at the same height as the corresponding miniscrew for attaching the orthodontic device constructed starting from said reference analogs.

### DESCRIPTION OF THE INVENTION

The method, as said, is intended to identify and fix references on a mold of plaster or equivalent material in order to construct an orthodontic appliance starting from said mold and said reference elements that replicate the positioning of miniscrews on the patient and said mold or cast represents a copy of the (upper) dental arch thereof.

The reference elements are also known by the technical term of positioning analogs or copiers.

Bearing in mind the above information, the subject method involves the identification of these reference points on a mold or cast of the dental arch or oral imprint; said mold or cast being of plaster or equivalent material:
- by a positioning body (template) bearing both the negative imprint of at least a portion of the dental arch and at least one cylindrical guide adapted to replicate the fitting direction and angle of the analogs and their depth, and wherein
- said positioning body (template) is implemented starting from a virtual image obtained by digital scanning of a model of the arch or oral imprint and software overlapping of one or more CAT images (CBCT); said virtual image also containing one or more references for positioning virtual miniscrews, and wherein said virtual miniscrews also identify the position of the reference analogs.

In a sequence, the steps are:
- digitally scan obtained from a model or cast of a dental arch or oral imprint detectable by a conventional method or by a digital method;
- software overlapping with a virtual image obtained by CBCT or lateral RX technique;
- obtaining a virtual 3D software image;
- programming and positioning miniscrew analogs on said virtual 3D software image corresponding to those to be inserted in a palatal dental arch to which the mold refers;
- digitally processing and modeling a virtual positioning guide;
- constructing a physical positioning body (guide template) using a 3D molding technique, stereolithography or prototyping technique, or milling;
- positioning said physical positioning body, or guide template, on the mold of a dental arch or oral imprint;
- inserting and fixing the miniscrew analogs; the analog head is positioned at the same height as that of the miniscrew corresponding to the future positioning in the patient's mouth; the fixing takes place in the plaster mold or in the mold developed by 3D printer;
- constructing the orthodontic appliance on the reference analogs and on the mold itself.

Unlike what proposed to date, it is further contemplated to position the physical positioning body (guide template) itself on the dental arch, by a doctor, and use it as a reference guide for fixing the orthodontic miniscrews on which the orthodontic appliance previously made in the laboratory will then be fixed.

Therefore the use of a physical positioning body is also disclosed:
- As a guide for positioning the reference analogs of orthodontic miniscrews on a plaster mold or obtained with a 3D printer and subsequent construction of an orthodontic appliance,
- As a reference guide for fitting miniscrews in the patient's mouth for the subsequent fixing of the orthodontic appliance previously made in the laboratory.

## Claims

1. Method **characterized in that** it comprises the steps of:
• digitally scanning a mold or cast of a dental arch or oral imprint detectable by a conventional method or by a digital method;
• software overlapping said digitally scan with a further virtual image of the arch obtained by CBCT or lateral RX;
• obtaining a virtual 3D software image;
• programming and positioning miniscrew analogs on said virtual 3D software image corresponding to those to be inserted in a palatal dental arch to which the mold refers;
• digitally processing and modeling a virtual positioning guide;
• constructing a physical positioning body (guide template) using a 3D molding technique, stereolithography or prototyping technique, or milling;
• positioning said physical positioning body, or guide template, on the mold of a dental arch or oral imprint;
• inserting and fixing the miniscrew analogs; the analog head is positioned at the same height as that of the miniscrew corresponding to the future positioning in the patient's mouth; the fixing takes place in the plaster mold or in the mold developed by 3D printer.
• constructing the orthodontic appliance on the reference analogs and on the mold itself.

## Patentansprüche

1. Verfahren, **dadurch gekennzeichnet, dass** es die folgenden Schritte umfasst:
• digitales Scannen einer Form oder eines Abdrucks eines Zahnbogens oder eines oralen Abdrucks, der mit einem herkömmlichen Verfahren oder mit einem digitalen Verfahren erkennbar ist;
• Software-Überlappen des genannten digitalen Scannens mit einem weiteren virtuellen Bild des Bogens, das durch CBCT oder lateralen RX erhalten wird;
• Erhalten eines virtuellen 3D-Software-Bildes;
• Programmieren und Positionieren von Mini-Schrauben-Analoga auf dem genannten virtuellen 3D-Software-Bild, die denjenigen entsprechen, die in einen palatinalen Zahnbogen eingesetzt werden sollen, auf den sich die Form bezieht;
• Digital-Verarbeiten und Modellieren eine virtuellen Positionierungshilfe;
• Konstruieren eines physischen Positionierungskörpers (Führungsschablone) unter Verwendung einer 3D-Formtechnik, einer Stereolithographie- oder Prototypentechnik oder mittels eines Fräsens;
• Positionieren des genannten physischen Positionierungskörpers oder der Führungsschablone auf der Form eines Zahnbogens oder eines oralen Abdrucks;
• Einsetzen und Fixieren der Minischraubenanaloga; der analoge Kopf befindet sich auf der gleichen Höhe wie die Minischraube, die der zukünftigen Positionierung im Mund des Patienten entspricht; die Fixierung erfolgt in der Gipsform oder in der vom 3D-Drucker entwickelten Form.
• Konstruieren der kieferorthopädischen Vorrichtung auf den Referenzanaloga und auf der Form selbst.

## Revendications

1. Méthode **caractérisé en ce qu'**il comprend les étapes consistant à:
• balayer numériquement un moule ou une pièce moulée d'une arche dentaire ou d'une empreinte buccale détectable par une méthode conventionnelle ou par une méthode numérique;
• un logiciel chevauchant ledit balayage numérique avec une autre image virtuelle de l'arche obtenue par CBCT ou RX latéral;
• obtenir une image 3D virtuelle d'un logiciel;
• programmer et positionner des analogues de mini-vis sur ladite image 3D virtuelle du logiciel correspondant à ceux qui doivent être insérés dans une arche dentaire palatale à laquelle se réfère le moule;
• traitement numérique et modélisation d'un guide de positionnement virtuel;
• construction d'un corps de positionnement physique (gabarit de guidage) à l'aide d'une technique de moulage 3D, d'une technique de stéréo-lithographie ou de prototypage, ou par un fraisage;
• positionnement dudit corps de positionnement physique, ou gabarit de guidage, sur le moule d'une arche dentaire ou d'une empreinte orale;
• insertion et fixation des analogues de mini-vis; la tête analogique est positionnée à la même hauteur que celle de la mini-vis correspondant au positionnement futur dans la bouche du patient; la fixation a lieu dans le moule en plâtre ou dans le moule développé par une imprimante 3D.
• construction de l'appareil orthodontique sur les analogues de référence et sur le moule lui-même.
